(19) **Europäisches Patentamt**
**European Patent Office**
**Office européen des brevets**

(11) **EP 4 614 645 A1**

(12) **EUROPEAN PATENT APPLICATION**
published in accordance with Art. 153(4) EPC

(43) Date of publication:
**10.09.2025  Bulletin 2025/37**

(21) Application number: **23885672.8**

(22) Date of filing: **27.10.2023**

(51) International Patent Classification (IPC):
$H01M\ 10/0562^{(2010.01)}$    $B05D\ 3/02^{(2006.01)}$
$B05D\ 5/12^{(2006.01)}$    $B05D\ 7/00^{(2006.01)}$
$B05D\ 7/24^{(2006.01)}$    $B32B\ 5/18^{(2006.01)}$
$B32B\ 7/025^{(2019.01)}$    $B32B\ 18/00^{(2006.01)}$
$C01B\ 33/20^{(2006.01)}$    $C01F\ 7/028^{(2022.01)}$
$C04B\ 35/113^{(2006.01)}$    $C04B\ 35/626^{(2006.01)}$
$H01B\ 13/00^{(2006.01)}$    $H01M\ 10/054^{(2010.01)}$

(52) Cooperative Patent Classification (CPC):
**B05D 3/02; B05D 5/12; B05D 7/00; B05D 7/24;
B32B 5/18; B32B 7/025; B32B 18/00; C01B 33/20;
C01F 7/028; C04B 35/113; C04B 35/626;
H01B 13/00; H01M 10/054; H01M 10/0562;
Y02E 60/10**

(86) International application number:
**PCT/JP2023/038875**

(87) International publication number:
**WO 2024/095916 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **02.11.2022   JP 2022176210**

(71) Applicant: **Nippon Electric Glass Co., Ltd.
Otsu-shi, Shiga 520-8639 (JP)**

(72) Inventors:
• **TANAKA, Ayumu**
  **Otsu-shi, Shiga 520-8639 (JP)**
• **YAMATANI, Masahiro**
  **Otsu-shi, Shiga 520-8639 (JP)**

(74) Representative: **Tetzner, Michael
Tetzner & Partner mbB
Patent- und Rechtsanwälte
Van-Gogh-Strasse 3
81479 München (DE)**

(54) **SOLID ELECTROLYTE SHEET AND PRODUCTION METHOD FOR SAME**

(57)    Provided are a method for producing a solid electrolyte sheet and a solid electrolyte sheet, wherein, in a firing step during formation of the solid electrolyte sheet, the shrinkage of the sheet can be suppressed. A solid electrolyte sheet 10 includes: a first solid electrolyte layer 12 being a dense layer; and a second solid electrolyte layer 13 provided on at least one principal surface 12a, 12b of the first solid electrolyte layer 12 and being a porous layer, wherein a first solid electrolyte contained in the first solid electrolyte layer 12 has a smaller average crystal grain size than a second solid electrolyte contained in the second solid electrolyte layer 13.

**(Cont. next page)**

EP 4 614 645 A1

[FIG. 1]

(a)

(b)

(c)

(d)

**Description**

[Technical Field]

The present invention relates to methods for producing solid electrolyte sheets and solid electrolyte sheets.

[Background Art]

Lithium-ion secondary batteries have secured their place as high-capacity and light-weight power sources essential for mobile devices, electric vehicles, and so on. However, current lithium-ion secondary batteries employ as their electrolytes, mainly, combustible organic electrolytic solutions, which raises concerns about the risk of burning or explosion. As a solution to this problem, all-solid-state lithium-ion batteries using a solid electrolyte instead of an organic electrolytic solution have been under development. Furthermore, because, as for lithium, there are concerns about such issues as global rise in raw and processed material costs, all-solid-state sodium-ion secondary batteries are also being developed.

Patent Literature 1 below discloses an all-solid-state secondary battery including: a solid electrolyte sheet; and an electrode layer formed on a surface of the solid electrolyte sheet. Patent Literature 1 describes that the solid electrolyte sheet is formed in a manner that a second solid electrolyte layer is formed on at least one surface of a first solid electrolyte layer. Furthermore, Patent Literature 1 describes that the second solid electrolyte layer is a porous solid electrolyte layer.

[Citation List]

[Patent Literature]

[PTL 1]
WO2021/045039

[Summary of Invention]

[Technical Problem]

When, for example, a green sheet method is used in order to form a solid electrolyte sheet, the sheet may shrink because of densification during firing. Furthermore, when the solid electrolyte sheet is extremely thin, it may shrink heterogeneously in its plane to cause waviness or warpage. In this case, the handleability and strength of the solid electrolyte sheet may decrease.

An object of the present invention is to provide a method for producing a solid electrolyte sheet and a solid electrolyte sheet, wherein, in a firing step during formation of the solid electrolyte sheet, the shrinkage of the sheet can be suppressed.

[Solution to Problem]

A description will be given of aspects of a method for producing a solid electrolyte sheet and a solid electrolyte sheet, which can solve the above challenge.

A solid electrolyte sheet of aspect 1 in the present invention includes: a first solid electrolyte layer being a dense layer; and a second solid electrolyte layer provided on at least one principal surface of the first solid electrolyte layer and being a porous layer, wherein a first solid electrolyte contained in the first solid electrolyte layer has a smaller average crystal grain size than a second solid electrolyte contained in the second solid electrolyte layer.

A solid electrolyte sheet of aspect 2 is the solid electrolyte sheet according to aspect 1, wherein the second solid electrolyte layer is preferably provided on each of both principal surfaces of the first solid electrolyte layer.

A solid electrolyte sheet of aspect 3 is the solid electrolyte sheet according to aspect 1 or 2, wherein the average crystal grain size of the first solid electrolyte is preferably not less than $0.01\ \mu m$ and not more than $10\ \mu m$.

A solid electrolyte sheet of aspect 4 is the solid electrolyte sheet according to any one of aspects 1 to 3, wherein the average crystal grain size of the second solid electrolyte is preferably not less than $0.1\ \mu m$ and not more than $100\ \mu m$.

A solid electrolyte sheet of aspect 5 is the solid electrolyte sheet according to any one of aspects 1 to 4, wherein the first solid electrolyte layer and the second solid electrolyte layer are integrated and the second solid electrolyte layer has a larger thickness than the first solid electrolyte layer.

A solid electrolyte sheet of aspect 6 is the solid electrolyte sheet according to any one of aspects 1 to 5, wherein the second solid electrolyte layer preferably has pores larger in diameter than the thickness of the first solid electrolyte layer.

A solid electrolyte sheet of aspect 7 is the solid electrolyte sheet according to any one of aspects 1 to 6, wherein the pores present in the second solid electrolyte layer preferably has a diameter of not less than 0.1 $\mu$m and not more than 100 $\mu$m.

A solid electrolyte sheet of aspect 8 is the solid electrolyte sheet according to any one of aspects 1 to 7, wherein the second solid electrolyte layer preferably has a porosity of not less than 25% and not more than 97%.

A solid electrolyte sheet of aspect 9 is the solid electrolyte sheet according to any one of aspects 1 to 8, wherein at least one of the first solid electrolyte layer and the second solid electrolyte layer preferably contains at least one type of material selected from the group consisting of $\beta$"-alumina, $\beta$-alumina, and NASICON crystals.

A solid electrolyte sheet of aspect 10 is the solid electrolyte sheet according to any one of aspects 1 to 9, wherein the solid electrolyte sheet is preferably used in an all-solid-state sodium-ion secondary battery.

A method for producing a solid electrolyte sheet of aspect 11 in the present invention is a method for producing a solid electrolyte sheet including: a first solid electrolyte layer being a dense layer; and a second solid electrolyte layer provided on at least one principal surface of the first solid electrolyte layer and being a porous layer, and includes: the step (a) of adding an organic vehicle containing a binder to at least one powder of a first solid electrolyte powder and a raw material powder for the first solid electrolyte powder to prepare a slurry, applying the slurry to a base material, and drying the slurry to obtain a green sheet for forming a first solid electrolyte layer; the step (b) of adding an organic vehicle containing a binder to a mixed powder containing at least one powder of a second solid electrolyte powder and a raw material powder for the second solid electrolyte powder and a polymer powder to prepare a slurry, applying the slurry to a base material, and drying the slurry to obtain a green sheet for forming a second solid electrolyte layer; the step (c) of laying the green sheet for forming a second solid electrolyte layer on at least one of both principal surfaces of the green sheet for forming a first solid electrolyte layer to obtain a laminate; and the step (d) of firing the laminate to form a first solid electrolyte layer being a dense layer and form a second solid electrolyte layer being a porous layer, wherein the at least one powder of the first solid electrolyte powder and the raw material powder for the first solid electrolyte powder has a smaller average particle diameter than the at least one powder of the second solid electrolyte powder and the raw material powder for the second solid electrolyte powder.

A method for producing a solid electrolyte sheet of aspect 12 is the method for producing a solid electrolyte sheet according to aspect 11, wherein the second solid electrolyte layer is preferably formed on each of both the principal surfaces of the first solid electrolyte layer.

A method for producing a solid electrolyte sheet of aspect 13 is the method for producing a solid electrolyte sheet according to aspect 11 or 12, wherein the average particle diameter of the at least one powder of the first solid electrolyte powder and the raw material powder for the first solid electrolyte powder is preferably not less than 0.01 $\mu$m and not more than 10 $\mu$m.

A method for producing a solid electrolyte sheet of aspect 14 is the method for producing a solid electrolyte sheet according to any one of aspects 11 to 13, wherein the average particle diameter of the at least one powder of the second solid electrolyte powder and the raw material powder for the second solid electrolyte powder is preferably not less than 0.1 $\mu$m and not more than 100 $\mu$m.

A method for producing a solid electrolyte sheet of aspect 15 is the method for producing a solid electrolyte sheet according to any one of aspects 11 to 14, wherein the polymer powder preferably has an average particle diameter of not less than 0.1 $\mu$m and not more than 100 $\mu$m.

A method for producing a solid electrolyte sheet of aspect 16 is the method for producing a solid electrolyte sheet according to any one of aspects 11 to 15, wherein a compounding ratio of the at least one powder of the second solid electrolyte powder and the raw material powder for the second solid electrolyte powder to the polymer powder is preferably 75:25 to 3:97 in terms of volume ratio.

A method for producing a solid electrolyte sheet of aspect 17 is the method for producing a solid electrolyte sheet according to any one of aspects 11 to 16, wherein at least one of the first solid electrolyte layer and the second solid electrolyte layer preferably contains at least one type of material selected from the group consisting of $\beta$"-alumina, $\beta$-alumina, and NASICON crystals.

A method for producing a solid electrolyte sheet of aspect 18 is the method for producing a solid electrolyte sheet according to any one of aspects 11 to 17, wherein the solid electrolyte sheet is preferably used in an all-solid-state sodium-ion secondary battery.

[Advantageous Effects of Invention]

The present invention enables provision of a method for producing a solid electrolyte sheet and a solid electrolyte sheet, wherein, in a firing step during formation of the solid electrolyte sheet, the shrinkage of the sheet can be suppressed.

[Brief Description of Drawings]

[Fig. 1]

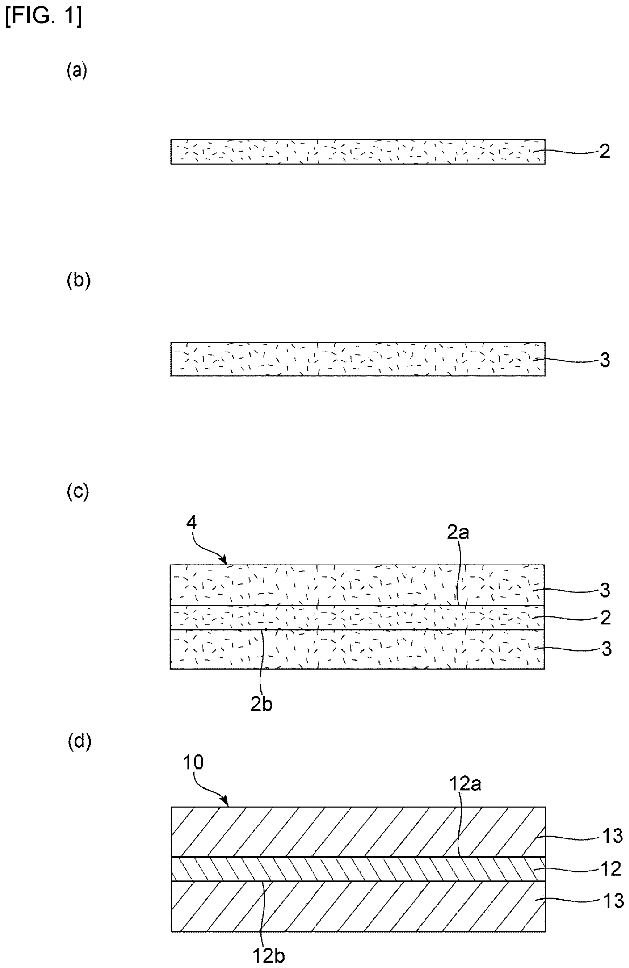

Figs. 1(a) to 1(d) are schematic cross-sectional views for illustrating details of individual steps in a method for producing a solid electrolyte sheet according to one embodiment of the present invention.
[Fig. 2]

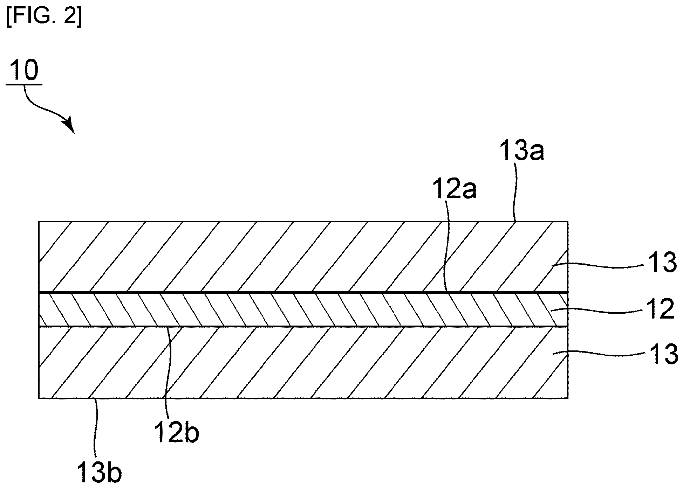

Fig. 2 is a schematic cross-sectional view showing a solid electrolyte sheet according to one embodiment of the present invention.
[Fig. 3]

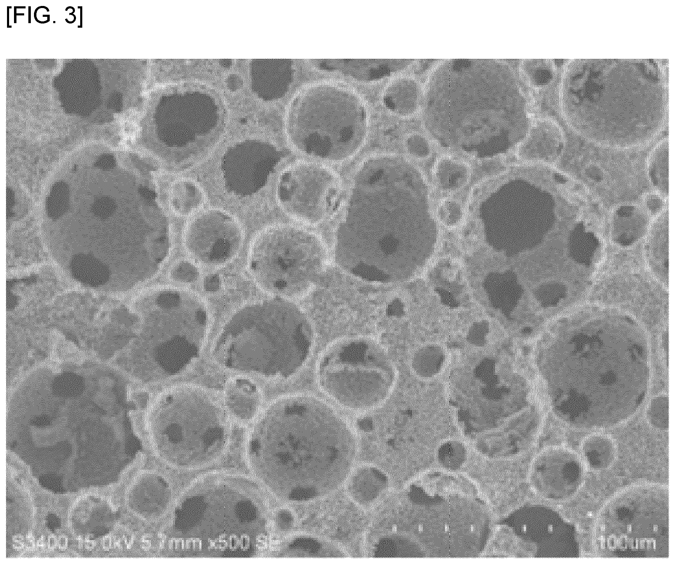

Fig. 3 is a scanning electron micrograph at 500X magnification of a surface of a solid electrolyte sheet produced in Example 1.
[Fig. 4]

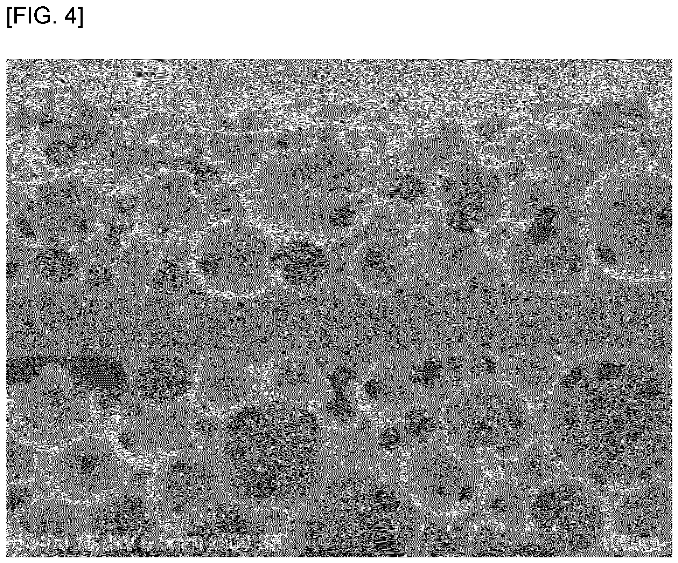

Fig. 4 is a scanning electron micrograph at 500X magnification of a cross section of the solid electrolyte sheet produced in Example 1.
[Fig. 5]

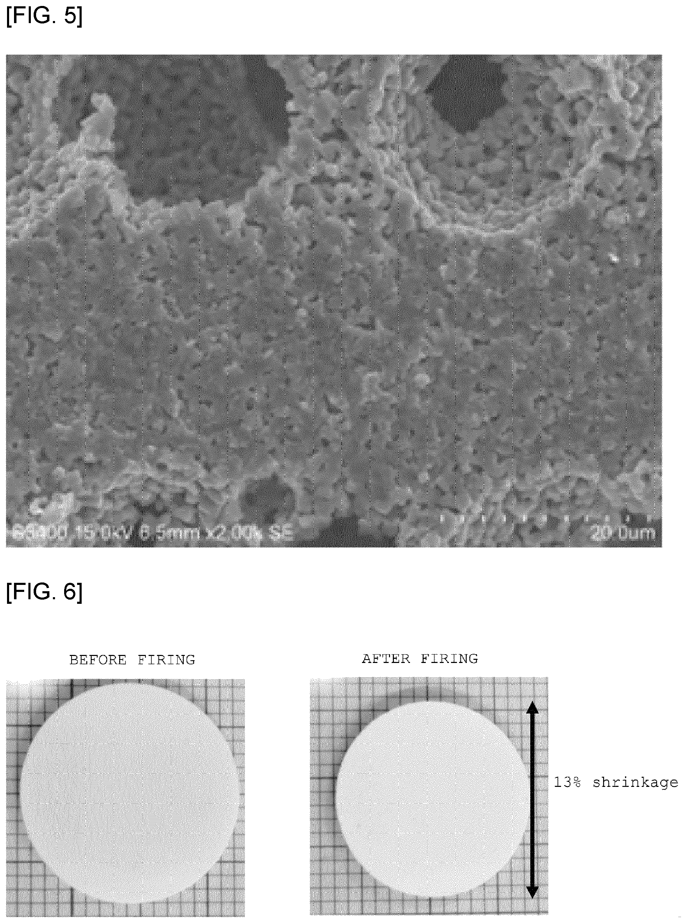

Fig. 5 is a scanning electron micrograph at 2000X magnification of the cross section of the solid electrolyte sheet produced in Example 1.
[Fig. 6]
Fig. 6 is photographs showing the appearances of the solid electrolyte sheet produced in Example 1 before and after the solid electrolyte sheet was fired.
[Fig. 7]

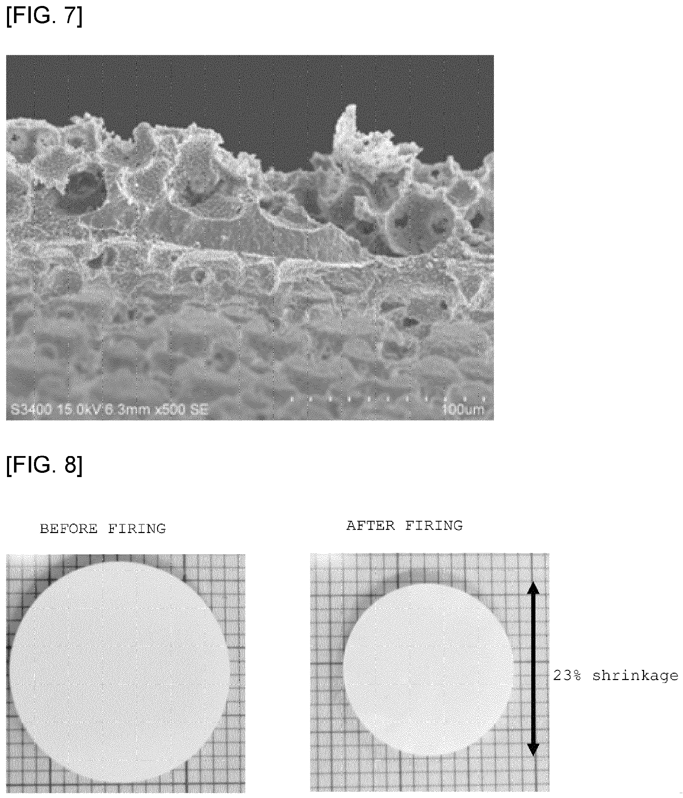

Fig. 7 is a scanning electron micrograph at 500X magnification of a cross section of a solid electrolyte sheet produced in Comparative Example 2.
[Fig. 8]
Fig. 8 is photographs showing the appearances of a solid electrolyte sheet produced in Comparative Example 1 before and after the solid electrolyte sheet was fired.
[Fig. 9]

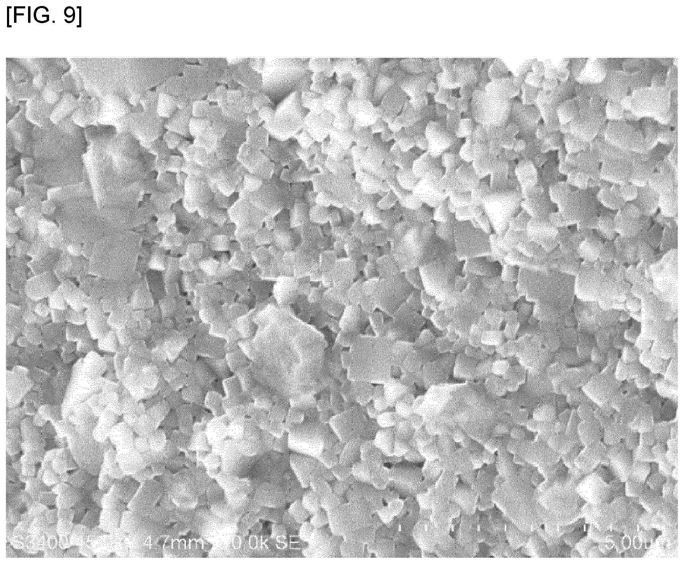

Fig. 9 is a scanning electron micrograph at 10000X magnification of a cross section of the first solid electrolyte layer of the solid electrolyte sheet produced in Example 1 after the solid electrolyte sheet was thermally etched.
[Fig. 10]

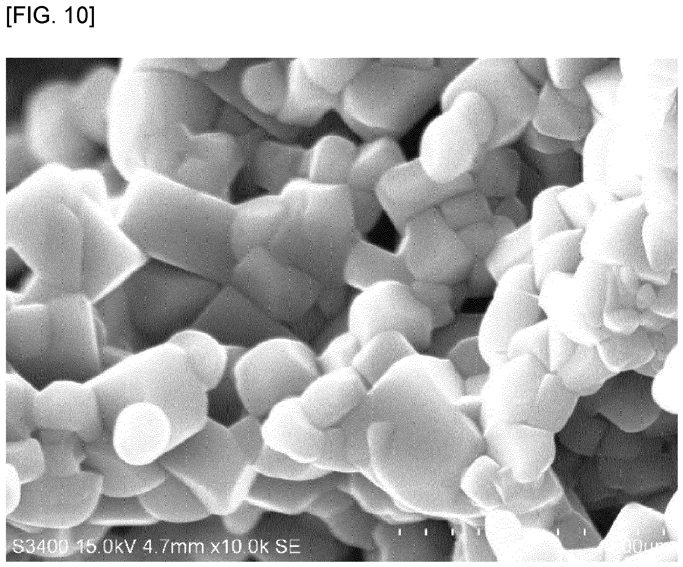

Fig. 10 is a scanning electron micrograph at 10000X magnification of a cross section of the second solid electrolyte layer of the solid electrolyte sheet produced in Example 1 after the solid electrolyte sheet was thermally etched.

[Description of Embodiments]

Hereinafter, a description will be given of a preferred embodiment. However, the following embodiment is merely illustrative and the present invention is not intended to be limited to the following embodiment. Throughout the drawings, members having substantially the same functions may be referred to by the same reference characters.

[Production Method for Solid Electrolyte Sheet]

A method for producing a solid electrolyte sheet according to the present invention is a method for producing a solid electrolyte sheet including: a first solid electrolyte layer being a dense layer; and a second solid electrolyte layer provided on at least one principal surface of the first solid electrolyte layer and being a porous layer.
The method for producing a solid electrolyte sheet according to the present invention includes the following steps (a) to (d):

(a) the step of adding an organic vehicle containing a binder to at least one powder of a first solid electrolyte powder and a raw material powder for the first solid electrolyte powder to prepare a slurry, applying the slurry to a base material, and drying the slurry to obtain a green sheet for forming a first solid electrolyte layer;
(b) the step of adding an organic vehicle containing a binder to a mixed powder containing at least one powder of a second solid electrolyte powder and a raw material powder for the second solid electrolyte powder and a polymer powder to prepare a slurry, applying the slurry to a base material, and drying the slurry to obtain a green sheet for forming a second solid electrolyte layer;
(c) the step of laying the green sheet for forming a second solid electrolyte layer on at least one of both principal surfaces of the green sheet for forming a first solid electrolyte layer to obtain a laminate; and

(d) the step of firing the laminate to form a first solid electrolyte layer being a dense layer and form a second solid electrolyte layer being a porous layer.

Furthermore, in the present invention, the at least one powder of the first solid electrolyte powder and the raw material powder for the first solid electrolyte powder has a smaller average particle diameter than the at least one powder of the second solid electrolyte powder and the raw material powder for the second solid electrolyte powder. For example, the average particle diameter of the first solid electrolyte powder may be smaller than the average particle diameter of the second solid electrolyte powder. Alternatively, the average particle diameter of the raw material powder for the first solid electrolyte powder may be smaller than the average particle diameter of the raw material powder for the second solid electrolyte powder.

Since the method for producing a solid electrolyte sheet according to the present invention is composed as described above, sheet shrinkage can be suppressed in the firing step during formation of the solid electrolyte sheet. This can be explained as follows.

Conventionally, when, for example, a green sheet method is used in order to form a solid electrolyte sheet, the sheet may shrink because of densification during firing. Furthermore, when the solid electrolyte sheet is extremely thin, it may shrink heterogeneously in its plane to cause waviness or warpage. In this case, the handleability and strength of the solid electrolyte sheet may decrease.

In contrast to this, in the method for producing a solid electrolyte sheet according to the present invention, the second solid electrolyte layer being a porous layer is formed on at least one principal surface of the first solid electrolyte layer being a dense layer. Therefore, sheet shrinkage in the firing step can be suppressed.

However, when firing is performed in a state where the second solid electrolyte layer being a porous layer is layered on the first solid electrolyte layer being a dense layer, the second solid electrolyte layer being a porous layer may peel from the first solid electrolyte layer. Therefore, as a result, shrinkage of the first solid electrolyte layer may not be able to be adequately suppressed.

In contrast to this, the inventors found that, by making the average particle diameter of at least one powder of the first solid electrolyte powder and the raw material powder for the first solid electrolyte powder smaller than the average particle diameter of at least one powder of the second solid electrolyte powder and the raw material powder for the second solid electrolyte powder, it can be less likely that the second solid electrolyte layer being a porous layer peels from the first solid electrolyte layer and, thus, shrinkage of the obtained solid electrolyte sheet can be suppressed.

This can be considered as follows. When, in terms of the average particle diameter of solid electrolyte powder (or raw material powder therefor), a porous layer (the second solid electrolyte layer) is larger than a dense layer (the first solid electrolyte layer), the amount of shrinkage of the porous layer becomes relatively small and, thus, the amount of shrinkage of the entire laminate becomes equivalent to the amount of shrinkage of the porous layer. Furthermore, the dense layer becomes restrained at at least one principal surface by the porous layer. Therefore, it can be considered that the dense layer is less likely to cause a shape deformation and, thus, waviness and warpage can be suppressed.

Hereinafter, a description will be given of details of individual steps in the method for producing a solid electrolyte sheet according to the present invention, with reference to Figs. 1(a) to 1(d).

(a) Making of Green Sheet for Forming First Solid Electrolyte Layer

First, a first solid electrolyte powder is prepared.

For example, in the case where the obtained solid electrolyte sheet is used in an all-solid-state sodium-ion secondary battery, at least one type of material selected from among β"-alumina, β-alumina, and NASICON crystals can be prepared as the first solid electrolyte powder.

Specific examples of β"-alumina include the following trigonal crystals: $(Al_{10.35}Mg_{0.65}O_{16})(Na_{1.65}O)$, $(Al_{8.87}Mg_{2.13}O_{16})(Na_{3.13}O)$, $Na_{1.67}Mg_{0.67}Al_{10.33}O_{17}$, $Na_{1.49}Li_{0.25}Al_{10.75}O_{17}$, $Na_{1.72}Li_{0.3}Al_{10.66}O_{17}$, and $Na_{1.6}Li_{0.34}Al_{10.66}O_{17}$.

Specific examples of β-alumina include the following hexagonal crystals: $(Al_{10.35}Mg_{0.65}O_{12})(Na_{1.65}O)$,

$(Al_{10.37}Mg_{0.63}O_{12})(Na_{1.63}O)$, $NaAl_{11}O_{17}$, and $(Al_{10.32}Mg_{0.68}O_{16})(Na_{1.68}O)$.

The NASICON crystals are preferably made of a compound represented by a general formula $Na_sA1_tA2_uO_v$ (where A1 is at least one selected from Al, Y, Yb, Nd, Nb, Ti, Hf, and Zr, A2 is at least one selected from Si and P, s = 1.4 to 5.2, t = 1 to 2.9, u = 2.8 to 4.1, and v = 9 to 14). In this relation, A1 is preferably at least one selected from Y, Nb, Ti, and Zr. By doing so, crystals having excellent ionic conductivity can be obtained.

The respective preferred ranges of the indices in the above general formula are as follows.

The index s is preferably 1.4 to 5.2, more preferably 2.5 to 3.5, and even more preferably 2.8 to 3.1. If s is too small, the amount of sodium ions is small and, therefore, the ionic conductivity of the solid electrolyte is likely to decrease. On the other hand, if s is too large, surplus sodium forms compounds not contributing to ionic conductivity, such as sodium phosphate and sodium silicate, and, therefore, the ionic conductivity of the solid electrolyte is likely to decrease.

The index t is preferably 1 to 2.9, more preferably 1 to 2.5, and even more preferably 1.3 to 2. If t is too small, the three-dimensional network in crystals decreases and, therefore, the ionic conductivity of the solid electrolyte is likely to decrease. On the other hand, if t is too large, compounds not contributing to ionic conductivity, such as zirconia and alumina, are formed and, therefore, the ionic conductivity of the solid electrolyte is likely to decrease.

The index u is preferably 2.8 to 4.1, more preferably 2.8 to 4, even more preferably 2.9 to 3.2, and particularly preferably 2.95 to 3.1. If u is too small, the three-dimensional network in crystals decreases and, therefore, the ionic conductivity of the solid electrolyte is likely to decrease. On the other hand, if u is too large, crystals not contributing to ionic conductivity are formed and, therefore, the ionic conductivity of the solid electrolyte is likely to decrease.

The index v is preferably 9 to 14, more preferably 9.5 to 12, and even more preferably 11 to 12. If v is too small, A1 (for example, an aluminum component) has a low valence and, therefore, the electric insulation property is likely to decrease. On the other hand, if v is too large, a peroxidative state occurs and, thus, sodium ions are attracted by lonepairs of electrons of oxygen atoms. Therefore, the ionic conductivity of the solid electrolyte is likely to decrease.

The NASICON crystals are preferably monoclinic crystals, hexagonal crystals or trigonal crystals, and more preferably monoclinic crystals or trigonal crystals. In this case, the ionic conductivity of the solid electrolyte can be further increased.

Specific examples of the NASICON crystal include the following crystals: $Na_3Zr_2Si_2PO_{12}$, $Na_{3.2}Zr_{1.3}Si_{2.2}P_{0.8}O_{10.5}$, $Na_3Zr_{1.6}Ti_{0.4}Si_2PO_{12}$, $Na_3Hf_2Si_2PO_{12}$, $Na_{3.4}Zr_{0.9}Hf_{1.4}Al_{0.6}Si_{1.2}P_{1.8}O_{12}$, $Na_3Zr_{1.7}Nb_{0.24}Si_2PO_{12}$, $Na_{3.6}Ti_{0.2}Y_{0.8}Si_{2.8}O_9$, $Na_3Zr_{1.88}Y_{0.12}Si_2PO_{12}$, $Na_{3.2}Zr_{1.88}Y_{0.12}Si_2PO_{12}$, $Na_{3.05}Zr_2Si_{2.06}P_{0.95}O_{12}$, $Na_{3.4}Zr_2Si_{2.4}P_{0.6}O_{12}$, $Na_{3.6}Zr_{0.13}Yb_{1.67}Si_{0.11}P_{2.9}O_{12}$, and $Na_5YSi_4O_{12}$. Among them, the NA-SICON crystals are preferably $Na_{3.12}Zr_{1.88}Y_{0.12}Si_2PO_{12}$ or $Na_{3.05}Zr_2Si_{2.06}P_{0.95}O_{12}$. In this case, the sodium-ion conductivity can be further increased.

For example, in the case where the obtained solid electrolyte sheet is used in an all-solid-state lithium-ion secondary battery, at least one selected from among $La_{0.51}Li_{0.34}Ti_{2.94}$, $Li_{1.3}Al_{0.3}Ti_{1.7}(PO_4)_3$, $Li_7La_3Zr_2O_{12}$, $Li_{1.07}Al_{0.69}Ti_{1.46}(PO_4)_3$, and $Li_{1.5}Al_{0.5}Ge_{1.5}(PO_4)_3$ can be prepared as the first solid electrolyte powder.

Instead of the first solid electrolyte powder, a raw material powder for the first solid electrolyte powder (a powder to be formed into a solid electrolyte by a reaction in a later firing step) may be prepared. Alternatively, a mixed powder of the first solid electrolyte powder and the raw material powder for the first solid electrolyte powder may be prepared.

In the case where the raw material powder for the first solid electrolyte powder is, for example, a raw material powder for β"-alumina, a powder containing, in terms of % by mole, 65% to 98% $Al_2O_3$, 2% to 20% $Na_2O$, 0.3% to 15% $MgO+Li_2O$, 0% to 20% $ZrO_2$, and 0% to 5% $Y_2O_3$ can be prepared. Reasons why the composition is limited as just described will be described below.

$Al_2O_3$ is a main component of β"-alumina. The content of $Al_2O_3$ is, in terms of % by mole, preferably 65% to 98% and more preferably 70% to 95%. If $Al_2O_3$ is too less, the ionic conductivity of the solid electrolyte is likely to decrease. On the other hand, if $Al_2O_3$ is too much, α-alumina having no sodium-ion conductivity remains in the solid electrolyte and, thus, the ionic conductivity of the solid electrolyte is likely to decrease.

$Na_2O$ is a component that imparts sodium-ion conductivity to the solid electrolyte. The content of $Na_2O$ is, in terms of % by mole, preferably 2% to 20%, more preferably 3% to 18%, and even more preferably 4% to 16%. If $Na_2O$ is too less, the above effect is less likely to be obtained. On the other hand, if $Na_2O$ is too much, surplus sodium forms compounds not contributing to ionic conductivity, such as $NaAlO_2$ and, therefore, the ionic conductivity of the solid electrolyte is likely to decrease.

MgO and $Li_2O$ are components (stabilizing agents) that stabilize the structure of β"-alumina. The content of $MgO+Li_2O$ is, in terms of % by mole, preferably 0.3% to 15%, more preferably 0.5% to 10%, and even more preferably 0.8% to 8%. If $MgO+Li_2O$ is too less, α-alumina remains in the solid electrolyte and, therefore, the ionic conductivity is likely to decrease. On the other hand, if $MgO+Li_2O$ is too much, MgO or $Li_2O$ having failed to function as a stabilizing agent remains in the solid electrolyte and, therefore, the ionic conductivity is likely to decrease.

$ZrO_2$ and $Y_2O_3$ have the effect of inhibiting abnormal grain growth of β"-alumina during firing to increase the adhesion of particles of β"-alumina. As a result, the ionic conductivity of the solid electrolyte can be easily increased. The content of $ZrO_2$ is, in terms of % by mole, preferably 0% to 20%, more preferably 0% to 15%, even more preferably 1% to 13%, and particularly preferably 2% to 10%. On the other hand, the content of $Y_2O_3$ is, in terms of % by mole, preferably 0% to 5%, more preferably 0.01% to 4%, and even more preferably 0.02% to 3%. If $ZrO_2$ or $Y_2O_3$ is too much, the amount of β"-alumina produced decreases and, thus, the ionic conductivity of the solid electrolyte is likely to decrease.

In the case where the raw material powder for the first solid electrolyte powder is, for example, a raw material powder for NASICON crystals, a powder containing, in terms of % by mole, 17.5% to 50% $Na_2O$, 12% to 45% $Al_2O_3+Y_2O_3+Yb_2O_3+Nd_2O_3+Nb_2O_5+TiO_2+HfO_2+ZrO_2$, and 24% to 54% $SiO_2+P_2O_5$ can be prepared.

As described previously, the at least one powder of the first solid electrolyte powder and the raw material powder for the first solid electrolyte powder has a smaller average particle diameter than the at least one powder of the second solid electrolyte powder and the raw material powder for the second solid electrolyte powder.

The average particle diameter of the at least one powder of the first solid electrolyte powder and the raw material powder for the first solid electrolyte powder is preferably not less than 0.01 $\mu$m, more preferably not less than 0.05 $\mu$m, even more preferably not less than 0.1 $\mu$m, preferably not more than 10 $\mu$m, more preferably not more than 5 $\mu$m, even more preferably not more than 3 $\mu$m, still even more preferably not more than 1 $\mu$m, and particularly preferably not more than 0.6 $\mu$m. In this case, peeling of the second solid electrolyte layer 13 being a porous layer from the first solid electrolyte layer 12 can be even less likely to occur in the later firing step.

In the present invention, the average particle diameter refers to an average particle diameter ($D_{50}$) measured with a laser diffraction particle size distribution measurement device. In Examples herein, the average particle diameter ($D_{50}$) was measured with a device manufactured by Shimadzu Corporation and having a stock number "SALD-2200" as the laser diffraction particle size distribution measurement device.

Next, an organic vehicle is added to the prepared at least one powder of the first solid electrolyte powder and the raw material powder for the first solid electrolyte powder, thus making a slurry. The organic vehicle contains a binder. An example that can be used as the binder is a resin binder, such as polypropylene carbonate.

The binder may be a glass binder. An example that can be used as the glass binder is a sodium-ion conductive glass powder.

The sodium-ion conductive glass powder preferably contains, in terms of % by mole, 10% to 80% $Na_2O$, 10% to 60% $P_2O_5+B_2O_3+SiO_2$, and 0% to 55% $Al_2O_3+Y_2O_3+Y_2O_3+Nd_2O_3+Nb_2O_5+VO_5+TiO_2+HfO_2+ZrO_2+MgO+CaO+BaO$. The reasons why the glass composition is limited as just described will be described below. In the following description of the respective contents of the components, "%" refers to "% by mole" unless otherwise stated.

$Na_2O$ is a component that forms a sodium-ion conduction path. In addition, $Na_2O$ has the effect of decreasing the melting temperature and the softening point. When the softening point decreases, the raw material powder can be sintered at low temperature (for example, 1000°C or lower). The content of $Na_2O$ is preferably 10% to 80%, more preferably 15% to 75%, even more preferably 20% to 70%, particularly preferably 30% to 60%, and most preferably 40% to 60%. If the content of $Na_2O$ is too small, the sodium-ion conductivity of the solid electrolyte is likely to decrease. In addition, if the content of $Na_2O$ is too small, a dense sintered body is less likely to be obtained. On the other hand, if the content of $Na_2O$ is too large, the weather resistance is likely to decrease.

$P_2O_5$, $B_2O_3$, and $SiO_2$ are network forming components and have the effect of improving the chemical durability. Furthermore, when the glass powder contains these components, the glass powder can easily fuse to a sodium-ion conductive crystal powder during sintering of the raw material powder and, thus, sodium-ion conduction paths can be easily formed between sodium-ion conductive crystal particles.

The content of $P_2O_5$, $B_2O_3$, and $SiO_2$ is, in total, preferably 10% to 60%, more preferably 15% to 55%, and even more preferably 20% to 50%. If the content of $P_2O_5$, $B_2O_3$, and $SiO_2$ is too small, the above effects are less likely to be obtained. On the other hand, if the content of $P_2O_5$, $B_2O_3$, and $SiO_2$ is too large, the content of $Na_2O$ becomes relatively small and, thus, the sodium-ion conductivity is likely to decrease. Among $P_2O_5$, $B_2O_3$, and $SiO_2$, $P_2O_5$ and $SiO_2$ are preferably used and $P_2O_5$ is more preferably used. In this case, the sodium-ion conductivity of the solid electrolyte can be further increased.

The other components, such as $Al_2O_3$, $Y_2O_3$, $Yb_2O_3$, $Nd_2O_3$, $Nb_2O_5$, $V_2O_5$, $TiO_2$, $HfO_2$, $ZrO_2$, MgO, CaO, and BaO, are components that stabilize vitrification and concurrently increase the sodium-ion conductivity. Furthermore, when the glass powder contains these components, the glass powder can easily form a solid solution together with a sodium-ion conductive crystal powder during sintering of the raw material powder and, thus, sodium-ion conduction paths can be easily formed between sodium-ion conductive crystal particles. As a result, the sodium-ion conductivity of the solid electrolyte can be easily increased. The content of these other components is, in total, preferably 0% to 55%, more preferably 0.1% to 50%, even more preferably 0.5% to 40%, still even more preferably 1% to 40%, particularly preferably 5% to 40%, and most preferably 10% to 40%. If the content of these other components is too large, vitrification tends to become unstable. Among these other components, $Nb_2O_5$, $Y_2O_3$, and $V_2O_5$ are preferably used and $Nb_2O_5$ is more preferably used. In this case, the sodium-ion conductivity of the solid electrolyte can be further increased.

The organic vehicle may contain, aside from the binder, a solvent, a plasticizer, and so on. For example, water or an organic solvent, such as ethanol or acetone, can be used as the solvent. However, when water is used as the solvent, an alkaline component, such as sodium, may elute off from the raw material powder to increase the pH of the slurry and thus agglomerate the raw material powder. Therefore, an organic solvent is preferably used as the solvent.

The content of the at least one powder of the first solid electrolyte powder and the raw material powder for the first solid electrolyte powder in the slurry is preferably not less than 10% by mass, more preferably not less than 30% by mass, preferably not more than 80% by mass, and more preferably not more than 50% by mass. The content of the binder contained in the slurry may be, for example, not less than 5% by mass and not more than 50% by mass.

Next, the obtained slurry is applied to a base material and dried. The type of the base material is not particularly limited, but, for example, a resin film, such as a PET (polyethylene terephthalate) film, can be used. The drying temperature of the slurry may be, for example, not lower than 40°C and not higher than 100°C. The drying time for the slurry may be, for example, not less than 3 minutes and not more than 24 hours.

Next, the dried slurry is peeled away from the base material and, thus, a green sheet 2 for forming a first solid electrolyte layer shown in Fig. 1(a) can be obtained.

(b) Making of Green Sheet for Forming Second Solid Electrolyte Layer

First, a second solid electrolyte powder is prepared. Instead of the second solid electrolyte powder, a raw material powder for the second solid electrolyte powder (a powder to be formed into a solid electrolyte by a reaction in a later firing step) may be prepared. Alternatively, a mixed powder of the second solid electrolyte powder and the raw material powder for the second solid electrolyte powder may be prepared.

The average particle diameter of the at least one powder of the second solid electrolyte powder and the raw material powder for the second solid electrolyte powder is preferably not less than 0.1 $\mu$m, more preferably not less than 0.2 $\mu$m, even more preferably not less than 0.5 $\mu$m, particularly preferably not less than 0.8 $\mu$m, preferably not more than 100 $\mu$m, more preferably not more than 50 $\mu$m, even more preferably not more than 10 $\mu$m, still even more preferably not more than 5 $\mu$m, and particularly preferably not more than 3 $\mu$m. In this case, peeling of the second solid electrolyte layer 13 being a porous layer from the first solid electrolyte layer 12 can be even less likely to occur in the later firing step.

The average particle diameter ratio of the at least one powder of the second solid electrolyte powder and the raw material powder for the second solid electrolyte powder to the at least one powder of the first solid electrolyte powder and the raw material powder for the first solid electrolyte powder (second solid electrolyte powder to first solid electrolyte powder) is preferably not less than 1.01, more preferably not less than 1.1, even more preferably not less than 1.5, particularly preferably not less than 2, preferably not more than 1000, more preferably not more than 100, and even more preferably not more than 10. In this case, peeling of the second solid electrolyte layer 13 being a porous layer from the first solid electrolyte layer 12 can be even less likely to occur in the later firing step.

Examples of the powder that can be used as the at least one powder of the second solid electrolyte powder and the raw material powder for the second solid electrolyte powder are the same as those described for the at least one powder of the first solid electrolyte powder and the raw material powder for the first solid electrolyte powder, except for the use of powder having a different average particle diameter as described above.

Subsequently, a polymer powder is prepared. The polymer powder is a material for being burned off in the later firing step to form voids in an obtained second solid electrolyte layer. Examples of the polymer powder include acrylic resins, polyacrylonitrile, polymethacrylonitrile, and polystyrene. These polymer powders may be used singly or in combination of two or more of them.

The average particle diameter of the polymer powder is preferably not less than 0.1 $\mu$m, more preferably not less than 1 $\mu$m, even more preferably not less than 5 $\mu$m, particularly preferably not less than 10 $\mu$m, preferably not more than 100 $\mu$m, more preferably not more than 80 $\mu$m, even more preferably not more than 70 $\mu$m, and particularly preferably not more than 50 $\mu$m. If the average particle diameter of the polymer powder is too small, three-dimensionally connected voids are less likely to be formed in the obtained second solid electrolyte layer. On the other hand, if the average particle diameter of the polymer powder is too large, the sintering of the obtained second solid electrolyte layer becomes insufficient and, thus, the ionic conductivity may decrease.

The compounding ratio between the at least one powder of the second solid electrolyte powder and the raw material powder for the second solid electrolyte powder and the polymer powder is, in terms of volume ratio, preferably 75:25 to 3:97, more preferably 60:40 to 6:94, and even more preferably 40:60 to 9:91. If the content of the polymer powder is too small, three-dimensionally connected voids are less likely to be formed in the obtained second solid electrolyte layer. On the other hand, if the content of the polymer powder is too large, the sintering of the obtained second solid electrolyte layer becomes insufficient and, thus, the ionic conductivity may decrease.

The content ratio between the at least one powder of the second solid electrolyte powder and the raw material powder for the second solid electrolyte powder and the polymer powder is, in terms of mass ratio, preferably 95:5 to 20:80, more preferably 90:10 to 30:70, and even more preferably 80:20 to 40:60.

Next, an organic vehicle is added to the prepared mixed powder containing the at least one powder of the second solid electrolyte powder and the raw material powder for the second solid electrolyte powder and the polymer powder, thus making a slurry. Other components that can be used to be added to the organic vehicle, such as a binder, are the same as those described in the chapter of (a) Making of Green Sheet for Forming First Solid Electrolyte Layer.

The content of the at least one powder of the second solid electrolyte powder and the raw material powder for the second solid electrolyte powder in the slurry is preferably not less than 5% by mass, more preferably not less than 10% by mass, preferably not more than 80% by mass, and more preferably not more than 60% by mass. The content of the binder contained in the slurry may be, for example, not less than 5% by mass and not more than 30% by mass.

Next, the obtained slurry is applied to a base material and dried. The type of the base material is not particularly limited, but, for example, a resin film, such as a PET (polyethylene terephthalate) film, can be used. The drying temperature of the slurry may be, for example, not lower than 40°C and not higher than 100°C. The drying time for the slurry may be, for example, not less than 5 minutes and not more than 24 hours.

Next, the dried slurry is peeled away from the base material and, thus, a green sheet 3 for forming a second solid electrolyte layer shown in Fig. 1(b) can be obtained.

(c) Production of Laminate

Next, as shown in Fig. 1(c), the green sheet 3 for forming a second solid electrolyte layer is laid on each of both principal surfaces 2a, 2b of the green sheet 2 for forming a first solid electrolyte layer, thus obtaining a laminate 4. The laminate 4 may be obtained by layering the green sheets and then subjecting them to pressing, such as hot pressing. In this case, the adhesion between the green sheets can be further increased.

(d) Firing of Laminate

Next, the obtained laminate 4 is fired. Thus, as shown in Fig. 1(d), the first solid electrolyte layer 12 is formed and, concurrently, the second solid electrolyte layers 13 are formed. In the manner described so far, a solid electrolyte sheet 10 can be obtained in which the second solid electrolyte layers 13 being porous layers are provided on both principal surfaces 12a, 12b of the first solid electrolyte layer 12 being a dense layer.

In forming the first solid electrolyte layer 12, it is desirable to remove the binder in the green sheet 2 for forming a first solid electrolyte layer. Furthermore, in forming the second solid electrolyte layer 13, it is desirable to remove the binder in the green sheet 3 for forming a second solid electrolyte layer.

The firing temperature may be appropriately selected according to the type of solid electrolyte powder (or raw material powder) used. In the case where the solid electrolyte powder contains $\beta$-alumina or $\beta''$-alumina, the firing temperature is preferably not lower than 1300°C, more preferably not lower than 1400°C, even more preferably not lower than 1500°C, preferably not higher than 1800°C, and more preferably not higher than 1700°C. If the firing temperature is too low, the sintering tends to be insufficient. Alternatively, the reaction of the raw material powder becomes insufficient and, thus, desired crystals are less likely to be produced. On the other hand, if the firing temperature is too high, the amount of evaporation of sodium component or the like becomes large, heterogeneous crystals are thus likely to precipitate, and the ionic conductivity of the obtained solid electrolyte sheet 10 is likely to decrease.

In the case where the solid electrolyte powder contains NASICON crystals, the firing temperature is preferably not lower than 900°C, more preferably not lower than 1000°C, preferably not higher than 1400°C, and more preferably not higher than 1300°C. If the firing temperature is too low, the sintering tends to be insufficient. Alternatively, the reaction of the raw material powder becomes insufficient and, thus, desired crystals are less likely to be produced. On the other hand, if the firing temperature is too high, the amount of evaporation of sodium component or the like becomes large, heterogeneous crystals are thus likely to precipitate, and the ionic conductivity of the solid electrolyte sheet 10 is likely to decrease.

The firing time is appropriately adjusted so that sintering sufficiently progress. Specifically, the firing time is preferably 5 minutes to 600 minutes and particularly preferably 10 minutes to 300 minutes.

Although in the above embodiment the second solid electrolyte layers 13 being porous layers are formed on both principal surfaces 12a, 12b of the first solid electrolyte layer 12 being a dense layer, the second solid electrolyte layer 13 being a porous layer may be formed only on the first principal surface 12a of the first solid electrolyte layer 12 being a dense layer or the second solid electrolyte layer 13 being a porous layer may be formed only on the second principal surface 12b of the first solid electrolyte layer 12 being a dense layer.

The obtained solid electrolyte sheet 10 can be suitably used in an all-solid-state battery, such as an all-solid-state sodium-ion secondary battery or an all-solid-state lithium-ion secondary battery. Particularly, the solid electrolyte sheet 10 can be more suitably used in an all-solid-state sodium-ion secondary battery.

[Solid Electrolyte Sheet]

Fig. 2 is a schematic cross-sectional view showing a solid electrolyte sheet according to one embodiment of the present invention. As shown in Fig. 2, the solid electrolyte sheet 10 includes a first solid electrolyte layer 12 and second solid electrolyte layers 13.

The first solid electrolyte layer 12 has a first principal surface 12a and a second principal surface 12b opposed to each other. A second solid electrolyte layer 13 is provided on the first principal surface 12a of the first solid electrolyte layer 12. Furthermore, a second solid electrolyte layer 13 is also provided on the second principal surface 12b of the first solid electrolyte layer 12. Therefore, in the solid electrolyte sheet 10, the second solid electrolyte layers 13 are provided on both principal surfaces 12a, 12b of the first solid electrolyte layer 12.

In the solid electrolyte sheet 10, a first solid electrolyte contained in the first solid electrolyte layer 12 has a smaller average crystal grain size than a second solid electrolyte contained in the second solid electrolyte layer 13.

The solid electrolyte sheet 10 as just described can be produced by the above-described method for producing a solid electrolyte sheet 10. Therefore, in the solid electrolyte sheet 10, sheet shrinkage in the firing step during formation of the sheet is suppressed. Hence, even when the solid electrolyte sheet 10 is extremely thin, it is less likely to shrink heterogeneously in its plane and, thus, can be less likely to cause waviness and warpage. As a result, the solid electrolyte sheet 10 has excellent handleability and is less likely to decrease the strength.

The average crystal grain size of the first solid electrolyte is preferably not less than 0.01 $\mu$m, more preferably not less than 0.05 $\mu$m, even more preferably not less than 0.1 $\mu$m, preferably not more than 10 $\mu$m, more preferably not more than 5 $\mu$m, even more preferably not more than 3 $\mu$m, still even more preferably not more than 1 $\mu$m, and particularly preferably not more than 0.6 $\mu$m. In this case, the evenness and smoothness upon formation of a green sheet for the solid electrolyte sheet 10 can be made better and the adhesion upon layering and the denseness upon firing can be further increased. Therefore, the handleability of the ultimate solid electrolyte sheet 10 can be further increased.

The average crystal grain size of the second solid electrolyte is preferably not less than 0.1 $\mu$m, more preferably not less than 0.2 $\mu$m, even more preferably not less than 0.5 $\mu$m, particularly preferably not less than 0.8 $\mu$m, most preferably not less than 1.0 $\mu$m, preferably not more than 100 $\mu$m, more preferably not more than 50 $\mu$m, even more preferably not more than 10 $\mu$m, still even more preferably not more than 5 $\mu$m, particularly preferably not more than 3 $\mu$m, and most preferably not more than 2 $\mu$m. In this case, the evenness and smoothness upon formation of a green sheet for the second solid electrolyte can be made better and the adhesion upon layering and the denseness of the skeleton of the solid electrolyte upon firing can be increased. Therefore, the handleability of the ultimate solid electrolyte sheet 10 can be increased.

The average crystal grain sizes of the first solid electrolyte and the second solid electrolyte can be measured, for example, in the following manner.

First, a sample of the solid electrolyte sheet 10 is folded and broken to make a section. Next, the sample is subjected to heat treatment. It is desirable that this heat treatment is performed by thermally etching the sample in an electric furnace. The heat treatment temperature may be, for example, not lower than 900°C and not higher than 1600°C. The heat treatment time may be, for example, not less than 1 minute and not more than 60 minutes.

Next, the section of the sample after being subjected to the heat treatment is observed with a scanning electron microscope (SEM). For example, arbitrary 200 grains in the obtained SEM image are calculated and counted up in size grain by grain with image analysis software and the average grain size of the 200 grains is determined. In this manner, the respective average crystal grain sizes of the first solid electrolyte and the second solid electrolyte can be determined. In the image analysis, the area equivalent circle diameter of each crystal grain is assumed as the grain size.

In the solid electrolyte sheet 10 according to this embodiment, the first solid electrolyte layer 12 as a dense layer is integrated with the second solid electrolyte layers 13 as porous layers. Furthermore, in the solid electrolyte sheet 10 according to this embodiment, the second solid electrolyte layer 13 has a larger thickness than the first solid electrolyte layer 12. Although it is desirable that, like this embodiment, the first solid electrolyte layer 12 as a dense layer is integrated with the second solid electrolyte layers 13 as porous layers and the second solid electrolyte layer 13 has a larger thickness than the first solid electrolyte layer 12, the present invention is not particularly limited to this structure.

The thickness of the solid electrolyte sheet 10 is not particularly limited, but is preferably not less than 1 $\mu$m, more preferably not less than 5 $\mu$m, even more preferably not less than 10 $\mu$m, particularly preferably not less than 20 $\mu$m, preferably not more than 1000 $\mu$m, more preferably not more than 800 $\mu$m, even more preferably not more than 500 $\mu$m, particularly preferably not more than 300 $\mu$m, and most preferably not more than 200 $\mu$m.

When the thickness of the solid electrolyte sheet 10 is not less than the above lower limit, the mechanical strength can be further increased and a short circuit between the positive electrode and the negative electrode can be less likely to occur. Furthermore, when the thickness of the solid electrolyte sheet 10 is not more than the above upper limit, the distance required for ionic conduction in the solid electrolyte becomes shorter and, thus, the ionic conductivity is further increased. In addition, when the solid electrolyte sheet 10 is used as a solid electrolyte sheet for an all-solid-state battery, the energy density per unit volume of the all-solid-state battery can be further increased.

In the solid electrolyte sheet 10, the thickness ratio of the second solid electrolyte layer 13 to the first solid electrolyte layer 12 (second solid electrolyte layer 13 to first solid electrolyte layer 12) is preferably not less than 1.01, more preferably not less than 1.1, preferably not more than 1000, and more preferably not more than 100. In this case, the shrinkage of the solid electrolyte sheet 10 in the firing step during formation of the sheet can be further suppressed. In addition, the adhesion between the solid electrolyte sheet 10 and the electrode layer can be further increased.

The flatness of the solid electrolyte sheet 10 is preferably not more than 200 $\mu$m, more preferably not more than 100 $\mu$m, and even more preferably not more than 50 $\mu$m. In this case, the handleability of the solid electrolyte sheet 10 can be further increased and the solid electrolyte sheet 10 can be less likely to develop cracks during formation of an electrode. The lower limit of the flatness of the solid electrolyte sheet 10 is not particularly limited, but may be, for example, 0.1 $\mu$m.

The flatness is defined as the magnitude of deviation of a planar form from the geometrically precise plane" in JIS B 0621:1984. The flatness of the solid electrolyte sheet 10 refers to a value of a gap formed when one surface of the sheet is sandwiched between parallel planes.

Although in the present invention it is sufficient that the second solid electrolyte layer 13 is provided on at least one principal surface 12a, 12b of the first solid electrolyte layer 12, the second solid electrolyte layers 13 are preferably provided on both principal surfaces 12a, 12b of the first solid electrolyte layer 12, like this embodiment. In this case, both surfaces of the solid electrolyte sheet 10 are each formed of the second solid electrolyte layer 13 and, therefore, the solid electrolyte sheet 10 when used in an all-solid-state battery can increase the adhesion to both the positive electrode layer and the negative electrode layer.

Hereinafter, a description will be given of details of individual layers constituting the solid electrolyte sheet 10.

(First Solid Electrolyte Layer)

The first solid electrolyte layer 12 not only takes a primary role of solid electrolyte, but also serves as a base material layer for ensuring the mechanical strength of the solid electrolyte sheet 10. Therefore, the first solid electrolyte layer 12 has a denser structure than the second solid electrolyte layer 13.

It is desirable that the first solid electrolyte layer 12 has a lower porosity than the second solid electrolyte layer 13. Furthermore, in the first solid electrolyte layer 12, the porosity defined by the following formula (1) is preferably not more than 20%, more preferably not more than 10%, and even more preferably not more than 5%. The lower limit of the porosity is not particularly limited, but may be, for example, 0.1%.

$$\texttt{Porosity = (1 - p/p0) × 100 (\%) ... Formula (1)}$$

In Formula (1), p is a bulk density and p0 is a true density.

In the case where the solid electrolyte sheet 10 is used in an all-solid-state sodium-ion secondary battery, the material that can be used for the first solid electrolyte layer 12 is, for example, at least one type of material selected from $\beta$"-alumina, $\beta$-alumina, and NASICON crystals.

In the case where the solid electrolyte sheet 10 is used in an all-solid-state lithium-ion secondary battery, the material that can be used for the first solid electrolyte layer 12 is, for example, at least one selected from $La_{0.51}Li_{0.34}Ti_{2.94}$, $Li_{1.3}Al_{0.3}Ti_{1.7}(PO_4)_3$, $Li_7La_3Zr_2O_{12}$, $Li_{1.07}Al_{0.69}Ti_{1.46}(PO_4)_3$, and $Li_{1.5}Al_{0.5}Ge_{1.5}(PO_4)_3$.

Specific examples of these materials that can be used are the same as those described in the chapter of (a) Making of Green Sheet for Forming First Solid Electrolyte Layer.

The thickness of the first solid electrolyte layer 12 is preferably not less than 0.01 $\mu$m, more preferably not less than 0.1 $\mu$m, even more preferably not less than 1 $\mu$m, particularly preferably not less than 5 $\mu$m, preferably not more than 300 $\mu$m, more preferably not more than 200 $\mu$m, even more preferably not more than 150 $\mu$m, and particularly preferably not more than 100 $\mu$m. If the thickness of the first solid electrolyte layer 12 is too small, the mechanical strength may decrease and the positive electrode and the negative electrode may be short-circuited. On the other hand, if the thickness of the first solid electrolyte layer 12 is too large, the ionic conductivity of the solid electrolyte sheet 10 is likely to decrease. In addition, when the solid electrolyte sheet 10 is used in an all-solid-state battery, the energy density per unit volume of the all-solid-state battery tends to become higher.

(Second Solid Electrolyte Layer)

The second solid electrolyte layer 13 is a porous layer that has a solid electrolyte and three-dimensionally connected voids. In producing an all-solid-state battery with the use of the solid electrolyte sheet 10, an electrode layer (a positive electrode layer or a negative electrode layer) is formed on each of principal surface 13a, 13b of the second solid electrolyte layers 13. In doing so, since the second solid electrolyte layers 13 have three-dimensionally connected voids, the material (an active material powder and so on) forming each electrode layer can easily penetrate into the voids. Therefore, by providing the second solid electrolyte layers 13 being porous layers on the first solid electrolyte layer 12 being a dense layer, the adhesion between the solid electrolyte sheet 10 and each electrode layer can be increased.

In the second solid electrolyte layer 13, the porosity defined by the above formula (1) is preferably not less than 25%, more preferably not less than 30%, even more preferably not less than 40%, preferably not more than 97%, more preferably not more than 95%, and even more preferably not more than 90%. When the porosity of the second solid electrolyte layer 13 is within the above range, three-dimensionally connected voids can be more easily formed and, thus, the adhesion between the solid electrolyte sheet 10 and the electrode layer can be further increased.

The diameter of pores present in the second solid electrolyte layer 13 is preferably not less than 0.1 $\mu$m, more preferably not less than 0.5 $\mu$m, even more preferably not less than 1 $\mu$m, preferably not more than 100 $\mu$m, more preferably not more than 80 $\mu$m, and even more preferably not more than 60 $\mu$m. In this case, the shrinkage of the solid electrolyte sheet 10 in the firing step during formation of the sheet can be further suppressed.

The diameter of pores present in the second solid electrolyte layer 13 can be measured by observing their 3D structures using X-ray CT and analyzing the obtained image. Otherwise, the diameter of pores can be determined by measurement using the mercury intrusion technique or 3D reconstruction using SEM-FIB.

Furthermore, as shown in Fig. 4, the second solid electrolyte layer 13 preferably has pores larger in diameter than the thickness of the first solid electrolyte layer 12. In this case, the shrinkage of the solid electrolyte sheet 10 in the firing step during formation of the sheet can be further suppressed. Fig. 4 is a scanning electron micrograph of a solid electrolyte sheet 10 produced in Example 1 to be hereinafter described. In Fig. 4, the solid electrolyte sheet 10 is formed in which the second solid electrolyte layers 13 being porous layers are provided on both principal surfaces 12a, 12b of the first solid electrolyte layer 12 being a dense layer.

In the case where the solid electrolyte sheet 10 is used in an all-solid-state sodium-ion secondary battery, the material that can be used for the second solid electrolyte layer 13 is, for example, at least one type of material selected from $\beta$"-alumina, $\beta$-alumina, and NASICON crystals.

Specific examples of these materials that can be used are the same as those described in the chapter of (a) Making of Green Sheet for Forming First Solid Electrolyte Layer.

In the case where the solid electrolyte sheet 10 is used in an all-solid-state lithium-ion secondary battery, the material that can be used for the second solid electrolyte layer 13 is, for example, at least one selected from $La_{0.51}Li_{0.34}Ti_{2.94}$, $Li_{1.3}Al_{0.3}Ti_{1.7}(PO_4)_3$, $Li_7La_3Zr_2O_{12}$, $Li_{1.07}Al_{0.69}Ti_{1.46}(PO_4)_3$, and $Li_{1.5}Al_{0.5}Ge_{1.5}(PO_4)_3$.

The thickness of the second solid electrolyte layer 13 is preferably not less than 1 $\mu$m, more preferably not less than 2 $\mu$m, even more preferably not less than 5 $\mu$m, particularly preferably not less than 10 $\mu$m, preferably not more than 1000 $\mu$m, more preferably not more than 800 $\mu$m, even more preferably not more than 500 $\mu$m, and particularly preferably not more than 300 $\mu$m.

If the thickness of the second solid electrolyte layer 13 is too small, the amount of the electrode layer-forming material penetrating the voids in the second solid electrolyte layer 13 is small. Therefore, the area of contact between the solid electrolyte sheet 10 and the electrode layer becomes small and, thus, the adhesion between them is likely to decrease. In this case, the ion conduction path at the interface between the solid electrolyte sheet 10 and the electrode layer becomes less and, therefore, the internal resistance of the battery tends to be high. As a result, the rapid charge/discharge characteristic is likely to decrease.

On the other hand, if the thickness of the second solid electrolyte layer 13 is too large, the electrode layer-forming material is difficult to fill in all the voids of the second solid electrolyte layer 13 and, therefore, the energy density per unit volume becomes low. In addition, the amount of shrinkage of the second solid electrolyte layer 13 during formation thereof becomes large and, thus, the second solid electrolyte layer 13 is likely to peel at the interface with the first solid electrolyte layer 12.

The arithmetic mean roughness Ra of the second solid electrolyte layer 13 (the arithmetic mean roughness of the principal surface 13a or the principal surface 13b) is preferably not less than 0.1 $\mu$m, more preferably not less than 1 $\mu$m, even more preferably not less than 5 $\mu$m, preferably not more than 300 $\mu$m, more preferably not more than 200 $\mu$m, and even more preferably not more than 100 $\mu$m. In this case, the adhesion between the solid electrolyte sheet 10 and the electrode layer can be further increased.

The second solid electrolyte layer 13 may be composed of a plurality of layers having different porosities. In this case, the plurality of layers having different porosities are preferably provided so that the layer closer to the first solid electrolyte layer 12 has a lower porosity. Furthermore, the number of layers having different porosities is preferably not less than 2, more preferably not less than 3, even more preferably not less than 4, particularly preferably not less than 5, preferably not more than 200, more preferably not more than 150, even more preferably not more than 100, particularly preferably not more than 50, still even more preferably not more than 20, and most preferably not more than 10.

A metallic layer may be provided on each of the principal surfaces 13a, 13b of the second solid electrolyte layers 13. Particularly, when electrode layers to be formed on the second solid electrolyte layers 13 are made of metallic sodium, metallic lithium or like material, the provision of a metallic layer between each of the second solid electrolyte layers 13 and the electrode layer improves the wettability between the second solid electrolyte layer 13 and the electrode layer to increase the adhesion between them and enable reduction in interfacial resistance. Thus, an all-solid-state battery having an excellent discharge capacity can be obtained.

Although the type of metal forming the metallic layer is not particularly limited, examples that can be used include Sn, Ti, Bi, Au, Al, Cu, Sb, and Pb. These metals for forming the metallic layer may be used singly or in combination of two or more of them. Alternatively, the metallic layer may be made of an alloy of any of these metals.

The thickness of the metallic layer is preferably not less than 3 nm, more preferably not less than 5 nm, even more preferably not less than 10 nm, particularly preferably not less than 20 nm, preferably not more than 5 $\mu$m, more preferably not more than 3 $\mu$m, even more preferably not more than 1 $\mu$m, and particularly preferably not more than 500 nm.

Examples of the method for forming the metallic layer include physical vapor deposition, such as evaporation and sputtering, chemical vapor deposition, such as thermal CVD, MOCVD, and plasma CVD, and liquid-phase deposition, such as plating, sol-gel method, and spin coating. Among them, evaporation or sputtering is preferred because the metallic layer can be easily thinned and the above effects due to provision of the metallic layer can be easily achieved.

Hereinafter, the present invention will be described in more detail with reference to examples. However, the following examples are merely illustrative. The present invention is not at all limited to the following examples.

(Example 1)

(a) Making of Green Sheet for Forming First Solid Electrolyte Layer

An amount of 15 parts by mass of polyvinyl butyral resin (trade name "S-LEC BM-SZ" manufactured by SEKISUI CHEMICAL CO., LTD.) was added as a binder to 100 parts by mass of NASICON (average particle diameter: 0.2 $\mu$m) as a first solid electrolyte powder and the mixture was dispersed into N-methylpyrrolidone, followed by well stirring with a planetary centrifugal mixer to form a slurry. The obtained slurry was applied onto a PET film using a doctor blade, dried at 80°C, and then peeled away from the PET film, thus obtaining a green sheet for forming a first solid electrolyte layer. The composition of NASICON crystals used was $Na_3Zr_2Si_2PO_{12}$.

(b) Making of Green Sheet for Forming Second Solid Electrolyte Layer

NASICON (average particle diameter: 2.0 $\mu$m) as a second solid electrolyte powder and cross-linked polymethylmethacrylate particles (stock number "TECHPOLYMER MBX-50" manufactured by Sekisui Kasei Co., Ltd., average particle diameter: 50 $\mu$m) as polymer particles were weighed to reach a volume ratio of 1:5. An amount of 20 parts by mass of polyvinyl butyral resin (trade name "S-LEC BM-SZ" manufactured by SEKISUI CHEMICAL CO., LTD.) was added as a binder to 100 parts by mass of the above mixture and the obtained mixture was dispersed into N-methylpyrrolidone, followed by well stirring with a planetary centrifugal mixer to form a slurry. The obtained slurry was applied onto a PET film using a doctor blade, dried at 80°C, and then peeled away from the PET film, thus obtaining a green sheet for forming a second solid electrolyte layer. The composition of NASICON crystals used was $Na_3Zr_2Si_2PO_{12}$.

(c) Production of Laminate

The obtained green sheet for forming a second solid electrolyte layer was laid on each of both principal surfaces of the obtained green sheet for forming a first solid electrolyte layer, followed by hot-pressing at 90°C for five minutes to produce a laminate.

(d) Firing of Laminate

The obtained laminate was fired at 1100°C for four hours, thus producing a solid electrolyte sheet (thickness: 200 $\mu$m) in which second solid electrolyte layers being porous layers were provided on both principal surfaces of a first solid electrolyte layer being a dense layer.
In the obtained solid electrolyte sheet, the thicknesses of the first solid electrolyte layer and the second solid electrolyte layer were 20 $\mu$m and 90 $\mu$m, respectively. Furthermore, the porosities of the first solid electrolyte layer and the second solid electrolyte layer were 2% and 77%, respectively. The diameter of pores present in the second solid electrolyte layer was 40 $\mu$m.

(Examples 2 to 6)

A solid electrolyte sheet was produced in the same manner as in Example 1 except that NASICON having an average particle diameter shown in Table 1 below was used as a first solid electrolyte powder and a second solid electrolyte powder.
In each of the solid electrolyte sheets obtained in Examples 2 to 6, the thickness of the first solid electrolyte layer, the thickness of the second solid electrolyte layer, the thickness of the solid electrolyte sheet, the porosity of the first solid electrolyte layer, the porosity of the second solid electrolyte layer, and the diameter of pores present in the second solid electrolyte layer were as shown in Table 1 below.

(Comparative Example 1)

A solid electrolyte sheet (thickness: 20 $\mu$m) formed only of a first solid electrolyte layer being a dense layer was produced by firing a green sheet for forming a first solid electrolyte layer, which was made in the same manner as in Example 1, at 1100°C for four hours as it was.
In the obtained solid electrolyte sheet, the porosity of the first solid electrolyte layer was 2%.

(Comparative Example 2)

A solid electrolyte sheet (thickness: 180 $\mu$m) was produced in the same manner as in Example 1 except that NASICON having an average particle diameter of 2.0 $\mu$m was used as a first solid electrolyte powder.

In the obtained solid electrolyte sheet, the thicknesses of the first solid electrolyte layer and the second solid electrolyte layer were 20 $\mu$m and 80 $\mu$m, respectively. Furthermore, the porosities of the first solid electrolyte layer and the second solid electrolyte layer were 2% and 80%, respectively. The diameter of pores present in the second solid electrolyte layer was 20 $\mu$m.

(Comparative Example 3)

A solid electrolyte sheet formed only of a first solid electrolyte layer being a dense layer was produced by firing a green sheet for forming a first solid electrolyte layer, which was made in the same manner as in Example 2, at 1100°C for four hours as it was. In the obtained solid electrolyte sheet, the porosity of the first solid electrolyte layer was as shown in Table 2 below.

(Comparative Example 4)

A solid electrolyte sheet formed only of a first solid electrolyte layer being a dense layer was produced by firing a green sheet for forming a first solid electrolyte layer, which was made in the same manner as in Example 3, at 1100°C for four hours as it was. In the obtained solid electrolyte sheet, the porosity of the first solid electrolyte layer was as shown in Table 2 below.

Fig. 3 is a scanning electron micrograph at 500X magnification of a surface of a solid electrolyte sheet produced in Example 1. Fig. 4 is a scanning electron micrograph at 500X magnification of a cross section of the solid electrolyte sheet produced in Example 1. Fig. 5 is a scanning electron micrograph at 2000X magnification of the cross section of the solid electrolyte sheet produced in Example 1. Fig. 7 is a scanning electron micrograph at 500X magnification of a cross section of the solid electrolyte sheet produced in Comparative Example 1. The scanning electron microscope used was a microscope having a stock number "S-3400N", manufactured by Hitachi High-Tech Corporation.

Figs. 3 to 5 show that, in Example 1, a solid electrolyte sheet was formed in which second solid electrolyte layers being porous layers were provided on both principal surfaces of a first solid electrolyte layer being a dense layer. On the other hand, Fig. 7 shows that, in Comparative Example 1, a second solid electrolyte layer being a porous layer peeled from a first solid electrolyte layer being a dense layer.

Fig. 6 is photographs showing the appearances of the solid electrolyte sheet produced in Example 1 before and after the solid electrolyte sheet was fired. Fig. 8 is photographs showing the appearances of a solid electrolyte sheet produced in Comparative Example 1 before and after the solid electrolyte sheet was fired.

As shown in Fig. 6, as for the solid electrolyte sheet of Example 1, the percentage of shrinkage during firing was 13%. On the other hand, as shown in Fig. 8, as for the solid electrolyte sheet of Comparative Example 1, the percentage of shrinkage during firing was 23%. It was confirmed from the above that, in the solid electrolyte sheet of Example 1, the shrinkage during firing was suppressed as compared to the solid electrolyte sheet of Comparative Example 1.

In Examples and Comparative Examples, the method for measuring the percentage of shrinkage was as follows. A green sheet for forming a solid electrolyte layer or a laminate was punched into a 20 mm diameter piece with a hand punch to prepare a sample and the sample was fired in the conditions described above. The diameter of the sample after being fired was measured, the difference between the diameter (20 mm) of the sample before being fired and the diameter of the sample measured after being fired was determined, and the percentage of the difference to the diameter (20 mm) of the sample before being fired was assumed as an amount of shrinkage.

Furthermore, in Examples and Comparative Examples, the average crystal grain size of a first solid electrolyte contained in the first solid electrolyte layer and the average crystal grain size of a second solid electrolyte contained in the second solid electrolyte layer were measured by the following method.

First, a sample of the solid electrolyte sheet was folded and broken to make a section. Next, the sample was subjected to heat treatment. This heat treatment was performed by thermally etching the sample at 1000°C for 10 minutes using an electric furnace.

Next, the section of the sample after the heat treatment was observed with a scanning electron microscope (SEM, stock number "S-3400N type II", manufactured by Hitachi High-Technologies Corporation). Each of the average crystal grain sizes of the first solid electrolyte and the second solid electrolyte was determined by calculating and counting up the sizes of arbitrary 200 grains in the obtained SEM image grain by grain with image analysis software (ImageJ). In the image analysis, the area equivalent circle diameter of each crystal grain was assumed as the grain size.

Fig. 9 is a scanning electron micrograph at 10000X magnification of a cross section of the first solid electrolyte layer of the solid electrolyte sheet produced in Example 1 after the solid electrolyte sheet was thermally etched. Fig. 10 is a scanning electron micrograph at 10000X magnification of a cross section of the second solid electrolyte layer of the solid electrolyte sheet produced in Example 1 after the solid electrolyte sheet was thermally etched.

As shown in Figs. 9 and 10, in the solid electrolyte sheet produced in Example 1, the average crystal grain size of the first solid electrolyte was smaller than that of the second solid electrolyte.

The evaluation results of Examples 1 to 6 and Comparative Examples 1 to 4 are shown in Tables 1 and 2 below.

[Table 1]

|  | Example 1 | Example 2 | Example 3 | Example 4 | Example 5 | Example 6 |
|---|---|---|---|---|---|---|
| Average Particle Diameter of First Solid Electrolyte Powder ($\mu$m) | 0.2 | 0.1 | 1.0 | 0.2 | 0.2 | 2.0 |
| Average Particle Diameter of Second Solid Electrolyte Powder ($\mu$m) | 2.0 | 2.0 | 2.0 | 1.0 | 5.2 | 5.2 |
| Firing Temperature (°C) | 1100 | 1100 | 1100 | 1100 | 1100 | 1100 |
| Amount of Shrinkage during Firing (%) | 13 | 14 | 12 | 15 | 12 | 11 |
| Thickness of First Solid Electrolyte Layer ($\mu$m) | 20 | 20 | 20 | 20 | 20 | 20 |
| Thickness of Second Solid Electrolyte Layer ($\mu$m) | 90 | 90 | 90 | 80 | 80 | 80 |
| Thickness of Solid Electrolyte Sheet($\mu$m) | 200 | 200 | 200 | 180 | 180 | 180 |
| Porosity of First Solid Electrolyte Layer(%) | 2 | 1 | 2 | 2 | 2 | 4 |
| Porosity of Second Solid Electrolyte Layer(%) | 77 | 76 | 77 | 74 | 77 | 79 |
| Diameter of Pores Present in Second Solid Electrolyte Layer ($\mu$m) | 40 | 40 | 40 | 40 | 40 | 40 |
| Average Crystal Grain Size of First Solid Electrolyte ($\mu$m) | 0.4 | 0.2 | 1.3 | 0.4 | 0.4 | 2.4 |
| Average Crystal Grain Size of Second Solid Electrolyte ($\mu$m) | 2.4 | 2.4 | 2.4 | 1.3 | 1.7 | 4.1 |

[Table 2]

|  | Comp. Ex. 1 | Comp. Ex. 2 | Comp. Ex. 3 | Comp. Ex. 4 |
|---|---|---|---|---|
| Average Particle Diameter of First Solid Electrolyte Powder ($\mu$m) | 0.2 | 2.0 | 0.1 | 1.0 |
| Average Particle Diameter of Second Solid Electrolyte Powder($\mu$m) | - | 2.0 | - | - |
| Firing Temperature (°C) | 1100 | 1100 | 1100 | 1100 |
| Amount of Shrinkage during Firing (%) | 23 | Failed to Be Measured Due to Peeling | 25 | 18 |
| Thickness of First Solid Electrolyte Layer ($\mu$m) | 20 | 20 | 20 | 20 |
| Thickness of Second Solid Electrolyte Layer ($\mu$m) | - | 80 | - | - |

(continued)

| | Comp. Ex. 1 | Comp. Ex. 2 | Comp. Ex. 3 | Comp. Ex. 4 |
|---|---|---|---|---|
| Thickness of Solid Electrolyte Sheet ($\mu$m) | 20 | 180 | 20 | 20 |
| Porosity of First Solid Electrolyte Layer(%) | 2 | 2 | 1 | 2 |
| Porosity of Second Solid Electrolyte Layer(%) | - | 80 | - | - |
| Diameter of Pores Present in Second Solid Electrolyte Layer ($\mu$m) | - | 20 | - | - |
| Average Crystal Grain Size of First Solid Electrolyte ($\mu$m) | 0.4 | 2.4 | 0.2 | 1.3 |
| Average Crystal Grain Size of Second Solid Electrolyte ($\mu$m) | - | 2.4 | - | - |

As shown in Table 1, in the solid electrolyte sheets obtained in Examples 1 to 6, the average crystal grain size of the first solid electrolyte was smaller than that of the second solid electrolyte, the amount of shrinkage during firing was small, and waviness and warpage were suppressed. Furthermore, in the solid electrolyte sheets obtained in Examples 1 to 6, it was confirmed that they had excellent handleability and were less likely to decrease the strength. On the other hand, in the solid electrolyte sheets obtained in Comparative Examples 1, 3, and 4, as shown in Table 2, the amount of shrinkage during firing was large and waviness and warpage occurred because no second solid electrolyte layer was formed. Furthermore, in the solid electrolyte sheet obtained in Comparative Example 2, the average crystal grain size of the first solid electrolyte was equal to the average crystal grain size of the second solid electrolyte and peeling occurred between the first solid electrolyte layer and the second solid electrolyte layer.

(Example 7)

(a) Making of Green Sheet for Forming First Solid Electrolyte Layer

An amount of 15 parts by mass of polyvinyl butyral resin (trade name "S-LEC BM-SZ" manufactured by SEKISUI CHEMICAL CO., LTD.) was added as a binder to 100 parts by mass of $\beta$"-alumina (average particle diameter: 0.4 $\mu$m) as a first solid electrolyte powder and the mixture was dispersed into N-methylpyrrolidone, followed by well stirring with a planetary centrifugal mixer to form a slurry. The obtained slurry was applied onto a PET film using a doctor blade, dried at 80°C, and then peeled away from the PET film, thus obtaining a green sheet for forming a first solid electrolyte layer. The composition of $\beta$"-alumina used was $Na_{1.65}Al_{10.35}Mg_{0.65}O_{17}$.

(b) Making of Green Sheet for Forming Second Solid Electrolyte Layer

$\beta$"-alumina (average particle diameter: 1.2 $\mu$m) as a second solid electrolyte powder and cross-linked polymethylmethacrylate particles (stock number "TECHPOLYMER MBX-50" manufactured by Sekisui Kasei Co., Ltd., average particle diameter: 50 $\mu$m) as polymer particles were weighed to reach a volume ratio of 1:4. An amount of 20 parts by mass of polyvinyl butyral resin (trade name "S-LEC BM-SZ" manufactured by SEKISUI CHEMICAL CO., LTD.) was added as a binder to 100 parts by mass of the above mixture and the obtained mixture was dispersed into N-methylpyrrolidone, followed by well stirring with a planetary centrifugal mixer to form a slurry. The obtained slurry was applied onto a PET film using a doctor blade, dried at 80°C, and then peeled away from the PET film, thus obtaining a green sheet for forming a second solid electrolyte layer. The composition of $\beta$"-alumina used was $Na_{1.65}Al_{10.35}Mg_{0.65}O_{17}$.

(c) Production of Laminate

The green sheet for forming a second solid electrolyte layer was laid on each of both principal surfaces of the green sheet for forming a first solid electrolyte layer, followed by hot-pressing at 90°C for five minutes to produce a laminate.

(d) Firing of Laminate

The obtained laminate was fired at 1550°C for 30 minutes, thus producing a solid electrolyte sheet (thickness: 180 μm) in which second solid electrolyte layers being porous layers were provided on both principal surfaces of a first solid electrolyte layer being a dense layer.

In the obtained solid electrolyte sheet, the thicknesses of the first solid electrolyte layer and the second solid electrolyte layer were 20 μm and 80 μm, respectively. Furthermore, the porosities of the first solid electrolyte layer and the second solid electrolyte layer were 2% and 75%, respectively. The diameter of pores present in the second solid electrolyte layer was 40 μm.

(Example 8)

A solid electrolyte sheet (thickness: 120 μm) was produced in the same manner as in Example 7 except that β"-alumina (average particle diameter: 1.2 μm) as a second solid electrolyte powder and cross-linked polymethylmethacrylate particles (stock number "TECHPOLYMER SSX-120" manufactured by Sekisui Kasei Co., Ltd., average particle diameter: 20 μm) as polymer particles were weighed to reach a volume ratio of 1:5 in order to make a green sheet for forming a second solid electrolyte layer.

In the obtained solid electrolyte sheet, the thicknesses of the first solid electrolyte layer and the second solid electrolyte layer were 20 μm and 50 μm, respectively. Furthermore, the porosities of the first solid electrolyte layer and the second solid electrolyte layer were 2% and 78%, respectively. The diameter of pores present in the second solid electrolyte layer was 15 μm.

(Comparative Example 5)

A solid electrolyte sheet (thickness: 20 μm) formed only of a first solid electrolyte layer being a dense layer was produced by firing a green sheet for forming a first solid electrolyte layer, which was made in the same manner as in Example 7, at 1550°C for 30 minutes as it was.

In the obtained solid electrolyte sheet, the porosity of the first solid electrolyte layer was 1%.

In Examples 7 and 8 and Comparative Example 5, the average crystal grain size of a first solid electrolyte contained in the first solid electrolyte layer and the average crystal grain size of a second solid electrolyte contained in the second solid electrolyte layer were measured in the same method as in Example 1 except that the heat treatment by thermal etching was conducted at 1450°C for 10 minutes.

The percentages of shrinkage between before and after firing of the solid electrolyte sheets produced in Examples 7 and 8 and Comparative Example 5 are shown in Table 3 below.

[Table 3]

|  | Example 7 | Example 8 | Comp. Ex. 5 |
|---|---|---|---|
| Average Particle Diameter of First Solid Electrolyte Powder (μm) | 0.4 | 0.4 | 0.4 |
| Average Particle Diameter of Second Solid Electrolyte Powder (μm) | 1.2 | 1.2 | - |
| Firing Temperature (°C) | 1550 | 1550 | 1550 |
| Amount of Shrinkage during Firing (%) | 20 | 24 | 26 |
| Thickness of First Solid Electrolyte Layer (μm) | 20 | 20 | 20 |
| Thickness of Second Solid Electrolyte Layer (μm) | 80 | 50 | - |
| Thickness of Solid Electrolyte Sheet (μm) | 180 | 120 | 20 |
| Porosity of First Solid Electrolyte Layer(%) | 2 | 2 | 1 |
| Porosity of Second Solid Electrolyte Layer(%) | 75 | 78 | - |
| Diameter of Pores Present in Second Solid Electrolyte Layer (μm) | 40 | 15 | - |
| Average Crystal Grain Size of First Solid Electrolyte (μm) | 0.7 | 0.7 | 0.7 |
| Average Crystal Grain Size of Second Solid Electrolyte (μm) | 1.5 | 1.5 | - |

As shown in Table 3, as for the solid electrolyte sheets of Examples 7 and 8, their percentages of shrinkage during firing were 20% and 24%, respectively. On the other hand, as shown in Table 3, as for the solid electrolyte sheet of Comparative Example 5, the percentage of shrinkage during firing was 26%. It was confirmed from the above that, also in the case of use of the solid electrolyte sheet of Example 2 in which the solid electrolyte was β"-alumina, the shrinkage during firing was suppressed.

[Reference Signs List]

2 ... green sheet for forming a first solid electrolyte layer
2a, 12a ... first principal surface
2b, 12b ... second principal surface
3 ... green sheet for forming a second solid electrolyte layer
4 ... laminate
10 ... solid electrolyte sheet
12 ... first solid electrolyte layer
13 ... second solid electrolyte layer
13a, 13b ... principal surface

**Claims**

1. A solid electrolyte sheet comprising:

   a first solid electrolyte layer being a dense layer; and
   a second solid electrolyte layer provided on at least one principal surface of the first solid electrolyte layer and being a porous layer,
   wherein a first solid electrolyte contained in the first solid electrolyte layer has a smaller average crystal grain size than a second solid electrolyte contained in the second solid electrolyte layer.

2. The solid electrolyte sheet according to claim 1, wherein the second solid electrolyte layer is provided on each of both principal surfaces of the first solid electrolyte layer.

3. The solid electrolyte sheet according to claim 1 or 2, wherein the average crystal grain size of the first solid electrolyte is not less than 0.01 $\mu$m and not more than 10 $\mu$m.

4. The solid electrolyte sheet according to claim 1 or 2, wherein the average crystal grain size of the second solid electrolyte is not less than 0.1 $\mu$m and not more than 100 $\mu$m.

5. The solid electrolyte sheet according to claim 1 or 2, wherein the first solid electrolyte layer and the second solid electrolyte layer are integrated and the second solid electrolyte layer has a larger thickness than the first solid electrolyte layer.

6. The solid electrolyte sheet according to claim 1 or 2, wherein the second solid electrolyte layer has pores larger in diameter than a thickness of the first solid electrolyte layer.

7. The solid electrolyte sheet according to claim 1 or 2, wherein pores present in the second solid electrolyte layer have a diameter of not less than 0.1 $\mu$m and not more than 100 $\mu$m.

8. The solid electrolyte sheet according to claim 1 or 2, wherein the second solid electrolyte layer has a porosity of not less than 25% and not more than 97%.

9. The solid electrolyte sheet according to claim 1 or 2, wherein at least one of the first solid electrolyte layer and the second solid electrolyte layer contains at least one type of material selected from the group consisting of β"-alumina, β-alumina, and NASICON crystals.

10. The solid electrolyte sheet according to claim 1 or 2, being used in an all-solid-state sodium-ion secondary battery.

11. A method for producing a solid electrolyte sheet comprising: a first solid electrolyte layer being a dense layer; and a second solid electrolyte layer provided on at least one principal surface of the first solid electrolyte layer and being a porous layer,
the method comprising:

the step (a) of adding an organic vehicle containing a binder to at least one powder of a first solid electrolyte powder and a raw material powder for the first solid electrolyte powder to prepare a slurry, applying the slurry to a base material, and drying the slurry to obtain a green sheet for forming a first solid electrolyte layer;
the step (b) of adding an organic vehicle containing a binder to a mixed powder containing at least one powder of a second solid electrolyte powder and a raw material powder for the second solid electrolyte powder and a polymer powder to prepare a slurry, applying the slurry to a base material, and drying the slurry to obtain a green sheet for forming a second solid electrolyte layer;
the step (c) of laying the green sheet for forming a second solid electrolyte layer on at least one of both principal surfaces of the green sheet for forming a first solid electrolyte layer to obtain a laminate; and
the step (d) of firing the laminate to form a first solid electrolyte layer being a dense layer and form a second solid electrolyte layer being a porous layer,
wherein the at least one powder of the first solid electrolyte powder and the raw material powder for the first solid electrolyte powder has a smaller average particle diameter than the at least one powder of the second solid electrolyte powder and the raw material powder for the second solid electrolyte powder.

12. The method for producing a solid electrolyte sheet according to claim 11, wherein the second solid electrolyte layer is formed on each of both principal surfaces of the first solid electrolyte layer.

13. The method for producing a solid electrolyte sheet according to claim 11 or 12, wherein the average particle diameter of the at least one powder of the first solid electrolyte powder and the raw material powder for the first solid electrolyte powder is not less than 0.01 $\mu$m and not more than 10 $\mu$m.

14. The method for producing a solid electrolyte sheet according to claim 11 or 12, wherein the average particle diameter of the at least one powder of the second solid electrolyte powder and the raw material powder for the second solid electrolyte powder is not less than 0.1 $\mu$m and not more than 100 $\mu$m.

15. The method for producing a solid electrolyte sheet according to claim 11 or 12, wherein the polymer powder has an average particle diameter of not less than 0.1 $\mu$m and not more than 100 $\mu$m.

16. The method for producing a solid electrolyte sheet according to claim 11 or 12, wherein a compounding ratio of the at least one powder of the second solid electrolyte powder and the raw material powder for the second solid electrolyte powder to the polymer powder is 75:25 to 3:97 in terms of volume ratio.

17. The method for producing a solid electrolyte sheet according to claim 11 or 12, wherein at least one of the first solid electrolyte layer and the second solid electrolyte layer contains at least one type of material selected from the group consisting of $\beta$"-alumina, $\beta$-alumina, and NASICON crystals.

18. The method for producing a solid electrolyte sheet according to claim 11 or 12, wherein the solid electrolyte sheet is used in an all-solid-state sodium-ion secondary battery.

[FIG. 1]

(a)

(b)

(c)

(d)

[FIG. 2]

[FIG. 3]

[FIG. 4]

[FIG. 5]

[FIG. 6]

BEFORE FIRING        AFTER FIRING

13% shrinkage

[FIG. 7]

S3400 15.0kV 6.3mm x500 SE 100um

[FIG. 8]

BEFORE FIRING

AFTER FIRING

23% shrinkage

[FIG. 9]

[FIG. 10]

## INTERNATIONAL SEARCH REPORT

| International application No. |
|---|
| **PCT/JP2023/038875** |

### A. CLASSIFICATION OF SUBJECT MATTER

*H01M 10/0562*(2010.01)i; *B05D 3/02*(2006.01)i; *B05D 5/12*(2006.01)i; *B05D 7/00*(2006.01)i; *B05D 7/24*(2006.01)i; *B32B 5/18*(2006.01)i; *B32B 7/025*(2019.01)i; *B32B 18/00*(2006.01)i; *C01B 33/20*(2006.01)i; *C01F 7/028*(2022.01)i; *C04B 35/113*(2006.01)i; *C04B 35/626*(2006.01)i; *H01B 13/00*(2006.01)i; *H01M 10/054*(2010.01)i

FI: H01M10/0562; B05D3/02 Z; B05D5/12 Z; B05D7/00 A; B05D7/24 301E; B05D7/24 302A; B05D7/24 303B; B32B5/18 101; B32B7/025; B32B18/00 A; C01B33/20; C01F7/028; C04B35/113; C04B35/626 250; H01B13/00 Z; H01B13/00 501Z; H01M10/054

According to International Patent Classification (IPC) or to both national classification and IPC

### B. FIELDS SEARCHED

Minimum documentation searched (classification system followed by classification symbols)

H01M10/0562; B05D3/02; B05D5/12; B05D7/00; B05D7/24; B32B5/18; B32B7/025; B32B18/00; C01B33/20; C01F7/028; C04B35/113; C04B35/626; H01B13/00; H01M10/054

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2007-529095 A (TRANIONICS CORPORATION) 18 October 2007 (2007-10-18) claims 2, 10, 22-24, paragraphs [0019], [0022]-[0023], [0029]-[0030], [0032], examples 3-6, fig. 1 | 1-9, 11-17 |
| Y | claims 2, 10, 22-24, paragraphs [0019], [0022]-[0023], [0029]-[0030], [0032], examples 3-6, fig. 1 | 10, 18 |
| Y | WO 2021/045039 A1 (NIPPON ELECTRIC GLASS CO., LTD.) 11 March 2021 (2021-03-11) claims 1, 10-11 | 10, 18 |
| X | JP 2015-220012 A (FUJITSU LTD) 07 December 2015 (2015-12-07) claims 1-3, 5-6, paragraph [0029], fig. 6 | 1-8 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 January 2024** | **16 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2023/038875**

| Patent document cited in search report | | | Publication date (day/month/year) | Patent family member(s) | | | Publication date (day/month/year) |
|---|---|---|---|---|---|---|---|
| JP | 2007-529095 | A | 18 October 2007 | US | 2007/0154762 | A1 | |
| | | | | claims 10, 17, paragraphs [0020], [0024]-[0025], [0033], [0039]-[0040], [0042], examples 3-6, fig. 1 | | | |
| | | | | EP | 1754269 | A2 | |
| | | | | WO | 2005/091946 | A2 | |
| | | | | CA | 2555087 | A1 | |
| WO | 2021/045039 | A1 | 11 March 2021 | US | 2022/0285725 | A1 | |
| | | | | claims 1, 10-11 | | | |
| | | | | CN | 114128004 | A | |
| JP | 2015-220012 | A | 07 December 2015 | (Family: none) | | | |

Form PCT/ISA/210 (patent family annex) (July 2022)

**EP 4 614 645 A1**

**Patent documents cited in the description**

- WO 2021045039 A